# EUROPÄISCHE PATENTSCHRIFT

(11) **EP 1 485 509 B1**
(45) Veröffentlichungstag und Bekanntmachung des Hinweises auf die Patenterteilung: **28.05.2008**
(21) Anmeldenummer: 03742539.4
(22) Anmeldetag: 19.02.2003
(51) Int. Cl.: C21D 1/667

(54) **VERFAHREN ZUM ABKÜHLEN VON BÄNDERN ODER PLATTEN AUS METALL UND KÜHLVORRICHTUNG**
METHOD FOR COOLING METAL STRIPS OR PLATES AND COOLING DEVICE
PROCEDE DE REFROIDISSEMENT DE BANDES OU DE PLAQUES METALLIQUES, ET DISPOSITIF DE REFROIDISSEMENT

(30) Priorität: 22.02.2002 DE 10207584
(43) Veröffentlichungstag der Anmeldung: 15.12.2004
(73) Patentinhaber: Limbach, Peter, 37075 Göttingen (DE)
(72) Erfinder: LIMBACH, Peter, 37075 Göttingen (DE); KLAS, Ernst, 53721 Siegburg (DE); SCHÄFER, Dirk, 40764 Langenfeld (DE); UNGER, Udo, 42799 Leichlingen (DE)
(74) Vertreter: Rehberg Hüppe + Partner
(86) Internationale Anmeldenummer: PCT/EP2003/001660
(87) Internationale Veröffentlichungsnummer: WO 2003/070991

(56) Entgegenhaltungen:
- US-A- 4 371 149
- US-A- 5 382 306
- US-A- 5 640 872

## Beschreibung

Die Erfindung betrifft ein Verfahren zum Abkühlen von Bändern oder Platten aus Metall, z.B. aus Aluminium oder aus einer Aluminiumlegierung, gemäß dem Oberbegriff des Anspruchs 1 und eine Kühlvorrichtung gemäß dem Oberbegriff des Anspruchs 5.

Nach einer Erwärmung von Bändern oder Platten aus Metall ist häufig eine rasche, kontrollier- und reproduzierbare Abkühlung erwünscht.

Beispielsweise ist es nach einem Warmwalzen oder einem Lösungsglühen von Bändern aus einer Aluminiumlegierung zur Erzielung optimaler mechanischer Festigkeiten, z.B. nach einer Kalt- und/oder Warmauslagerung, erforderlich, die Bänder mit hohen Abkühlgeschwindigkeiten z.B. größer 80°C/s abzukühlen. Derartige Abkühlverfahren werden auch Abschrecken oder Schroffabkühlung genannt.

Auch nach dem Lackieren von Bändern oder Platten aus Aluminium oder aus einer Aluminiumlegierung kann eine Schroffabkühlung der Bänder oder Platten mit hohen Abkühlgeschwindigkeiten erwünscht sein, z.B. um kurze Kühler einsetzen zu können.

Aus der EP 0 343 103 A1 ist ein Verfahren zum Kühlen von Walz- und Pressprodukten aus Metall, insbesondere Aluminium, bekannt, bei dem auf die Oberfläche der Produkte ein Gas/Flüssigkeitsgemisch in Form eines Nebels mittels Sprühdüsen aufgesprüht wird und das Kühlmittel vollständig verdampft.

Ein weiteres, gattungsgemäßes Verfahren und eine gattungsgemäße Vorrichtung zum Kühlen von warmgewalzten Platten und Bändern aus Metall, insbesondere aus Aluminium oder einer Aluminiumlegierung, ist aus der EP 0 695 590 A1 bekannt. Bei diesem Verfahren werden die Platten oder Bänder über Flachstrahldüsen direkt mit Wasser beaufschlagt. Die Flachstrahldüsen sind auf in Laufrichtung der Platten oder Bänder verlaufenden Düsenleisten angeordnet. Der aus den Flachstrahldüsen austretende Wasserstrahl bildet im Wesentlichen eine auf die Platten- oder Bandoberfläche gerichtete Ebene. Der Wasserstrahl wird unmittelbar nach seinem Austritt aus der Flachstrahldüse mittels Luft- oder Wasserstrahlen periodisch derart abgelenkt, dass er auf der Platten- oder Bandoberfläche eine Wischbewegung ausführt. Die Flachstrahldüsen sind in den Düsenleisten derart angeordnet, dass sich die Auftreffflächen benachbarter Wasserstrahlen bei der Wischbewegung in etwa berühren.

Innerhalb der Auftreffflächen der Wasserstrahlen aus Flachstrahldüsen ist die pro Zeit aufgebrachte Wassermenge und damit die Kühlleistung nicht homogen. Zusätzlich besteht eine starke Abhängigkeit der Größe der Auftreffflächen vom Abstand des Bandes zur Düsenöffnung der Flachstrahldüsen. Dies könnte bei schwankendem Abstand zu einer ungleichmäßigen Abkühlung führen, insbesondere wenn sich bei gering werdendem Abstand die Auftreffflächen bei der Wischbewegung nicht mehr treffen.

Zur weiteren Erhöhung der Kühlleistung ist aus der EP 0 839 918 A1 ein Verfahren zum Kühlen eines Gegenstandes durch Aufbringen eines flüssigen Kühlmittels auf die Oberfläche des Gegenstandes in der Form kontinuierlicher Kühlmittelstrahlen bekannt, bei dem die Förderleistung jedes Kühlmittelstrahls so eingestellt wird, dass das auf die Oberfläche auftreffende Kühlmittel vollständig verdampft. Die vollständige Verdampfung verhindert die Ausbildung eines, den, Wärmeentzug hemmenden Wasserfilms. Es entstehen keine lokalen. Ansammlungen von. Kühlmittel, die zu einer unkontrollierten Abkühlung und damit zu unterschiedlichen mechanischen Eigenschaften in Oberflächennähe des Gegenstandes führen. Derartige Unterschiede können sich bei einer späteren Umformaktion störend auf die Oberflächenqualität auswirken. Damit eine möglichst hohe Wassermenge zur Verdampfung gebracht werden kann, ohne dass sich an der Oberfläche des Gegenstandes ein Wasserfilm bildet, wird das Kühlmittel über eine Vielzahl über die zu kühlende Oberfläche verteilte Kühlmittelstrahlen geringen Durchmessers, bevorzugt 20 bis 200 µm, aufgebracht.

Zur Erzeugung derart feiner Kühlmittelstrahlen sind entsprechend geringe Düsendurchmesser notwendig. Als Folge davon wird zur Vermeidung von Verstopfungen ein hoher Filteraufwand für das zurückgeführte Kühlmittel benötigt. Da die gesamte Kühlmittelmenge verdampfen soll, ist die pro Zeit zuführbare Kühlmittelmenge und damit die Kühlleistung dieses Verfahrens begrenzt.

Zum Abkühlen eines auf Lösungsglühtemperatur erwärmten Bandes oder Profiles aus einer Aluminiumlegierung ist aus der EP 0 949 348 A1 bekannt, die Oberfläche des Bandes oder des Profils direkt mit einem Kühlmedium zu beaufschlagen, wobei als Kühlmedium z.B. flüssiger Stickstoff gleichmässig auf die Band- oder Profiloberfläche aufgesprüht wird und vollständig verdampft. In einer nachfolgenden Stufe kann mit Wasser oder Luft weiter gekühlt werden. Dieses Verfahren ist durch den Einsatz von Stickstoff aufwendiger und kostenintensiver als die Verwendung von Wasser als Kühlmittel.

Ein weiteres Problem bei der Schroffabkühlung, insbesondere von Bändern aus Aluminium oder einer Aluminiumlegierung ist, dass sich die Bänder während der Abkühlung verziehen und unplan werden. Dieser Effekt tritt bei der Beaufschlagung der Oberfläche der Bänder über Flachstrahldüsen direkt mit Wasser auf, wie aus der EP 0695 590 oder auch der DE 196 49 073 C2 bekannt, wobei vermutet wird, dass der Effekt durch Wasseransammlungen auf der Oberfläche und durch inhomogene Wassermengen zwischen und innerhalb der Auftreffflächen der Flachstrahldüsen begründet ist. Schwankende Wassermengen auf der Oberfläche können ein ungleichmäßiges Abkühlen und damit ein ungleichmäßiges Schrumpfen des Materials verursachen, das zu Verzug und zu Verwerfungen, d.h. zu plastischen Verformungen führen kann.

Das Problem des Verziehens während einer Schroffabkühlung tritt in geringerem Maße auch bei Platten, insbesondere aus Alumlnium oder einer Aluminiumlegierung, auf.

Ein Verfahren mit den Merkmalen des Oberbegriffs des Patentanspruchs 1 und eine Kühlvorrichtung mit den Merkmalen des Oberbegriffs des Patentanspruchs 5 sind aus der US 4,371,149 bekannt. Hier wird Wasser auf beide Seiten der zu behandelnden Bänder oder Platten flächig aufgesprüht.

Ein weiteres Verfahren mit den Merkmalen des Oberbegriffs des Patentanspruchs 1 und eine weitere Kühlvorrichtung mit den Merkmalen des Oberbegriffs des Patentanspruchs 5 sind aus der US 5,640,872 bekannt. Hier wird das Wasser in Form von zweidimensionalen Vorhängen, die sich in der Bewegungsrichtung der Bänder oder Platten erstrecken und quer zu der Bewegungsrichtung der Bänder oder Platten verschwenkt werden, von oben und unten auf die Bänder oder Platten aufgesprüht.

Aufgabe der Erfindung ist es, ein Verfahren gemäß dem Oberbegriff des Anspruchs 1 und eine entsprechende Kühlvorrichtung gemäß dem Oberbegriff des Anspruchs 5 zu entwickein, die zur Erziehung bestimmter Materialeigenschaften und/oder kleiner Kühlstrecken hohe Kühllestung, d.h. hohe Abkühlgeschwindlgkeiten, ermöglichen. Dabei sollen beim Einsatz von Wasser als Kühlmittel und bei möglichst geringem Filteraufwand örtliche Ansammlungen des Wassers an der Oberfläche der Bänder oder Platten vermieden werden.

Die Erfindung soll insbesondere geeignet sein, eine Schroffabkühlung von Bändern oder Platten, insbesondere aus Aluminium oder aus einer Alumiumlegierung, weitestgehend ohne Verzug der Bänder oder Platten während des Abkühlens zu bewirken.

Die Aufgabe ist durch die kennzeichnenden Merkmale der Ansprüche 1 und 5 gelöst.

Ein erfindungsgemäßes Verfahren ermöglicht eine Schroffabkühlung von Bändern oder Platten aus Aluminium oder aus einer Alumiumlegierung, bei der die Bänder oder Platten von einer Anfangstemperatur von 150 bis 600 °C mit einer Abkühlgeschwindigkeit von 80 bis 800°C/s, insbesondere 200 bis 400°C/s, auf eine Endtemperatur von 30 bis 300°C weitestgehend ohne Verzug abgekühlt werden.

Mit einem erfindungsgemäßen Verfahren werden, insbesondere bei einer Schroffabkühlung von Bändern aus Aluminium oder aus einer Alumiumlegierung, plane Bänder erzielt. Daher wird die Erfindung im folgenden beispielhaft anhand eines Verfahrens zum Abkühlen eines Bandes aus Aluminium oder aus einer Alumiumlegierung erläutert.

Bei einer erfindungsgemäßen Schroffabkühlung erfolgt eine Beaufschlagung überwiegend der unteren Oberfläche des Bandes durch aus Vollstrahldüsen austretende und auf der Oberfläche auftreffende Wasserstrahlen, wobei die Düsen in mindestens einer sich über die Breite des Bandes erstreckenden Düsenreihe angeordnet sind.

Die Düsenreihen können senkrecht zur Transportrichtung und/oder zumindest in Teilabschnitten in einem Winkel zur Senkrechten zur Transportrichtung verlaufen. Z. B. können Düsenreihen zum Ausgleich von Randeffekten in Randabschnitten in einem Winkel zu dieser Senkrechten verlaufen.

Vollstrahldüsen ermöglichen kompakte Wasserstrahlen, deren Durchmesser ohne Hindernisse im Verlauf der Strahlen über eine bestimmte Strahllänge, d.h. über einen bestimmten Abstand zur Düsenöffnung, konstant sind. Diese Strahllänge sollte größer sein als der Abstand der Düsenöffnung zum Band, so dass der Durchmesser der Auftrefffläche auf der Oberfläche des Bandes unabhängig vom Abstand zum Band dem Austrittsdurchmesser aus der Düsenöffnung entspricht. Der Austrittsdurchmesser aus der Düsenöffnung wird im folgenden Düsendurchmesser genannt. Der Abstand der Düsenöffnungen zum Band kann 50 bis 500 mm betragen. Der Einsatz von Vollstrahldüsen ist bei Reinigungs-, Hochdruckreinigungs- oder Schneidprozessen bekannt.

Die Vollstrahldüsen ermöglichen durch ihre gebündelten, kompakten Wasserstrahlen einen intensiven Wärmeübergang von der Oberfläche des Bandes auf das Kühlmittel Wasser. Mit Vollstrahldüsen mit einem Düsendurchmesser von 0,5 bis 5 mm, vorzugsweise von 1 bis 5 mm, werden bei Drücken, die die Kompaktheit der Wasserstrahlen sicherstellen, der Oberfläche des Bandes so große Wassermengen zugeführt, dass nur ein sehr kleiner Teil des Wassers in der Größenordnung von 5 bis 20 % und in vielen Fällen weniger als 10 % verdampft und der übrige Teil als Wasser erhalten bleibt, abtropft und in den Kreislauf zurückgeführt wird. Bei Bändern aus Aluminium oder aus einer Aluminiumlegierung werden bevorzugt Vollstrahldüsen mit einem Düsendurchmesser von 0,5 bis 3 mm, vorzugsweise 1 bis 3 mm eingesetzt.

Mit aus den Vollstrahldüsen austretenden Wasserstrahlen wird überwiegend die untere Oberfläche des Bandes beaufschlagt. Vorzugsweise wird 90 bis 100 % der insgesamt zugeführten Wassermenge durch die Vollstrahldüsen an die untere Oberfläche des Bandes gebracht. Bei einer Beaufschlagung der unteren Oberfläche wird eine unterschiedliche Abkühlung verursachende Ansammlung von Wasser an der Oberfläche des Bandes vermieden.

Zur weiteren Erhöhung der Abkühlgeschwindigkeit kann zusätzlich die obere Oberfläche des Bandes durch Wasserstrahlen beaufschlagt werden. Die dazu eingesetzte, geringere Wassermenge wird so bestimmt, dass das Wasser der Wasserstrahlen vollständig verdampft.

Vorzugsweise wird die gesamte zugeführte Wassermenge durch die Vollstrahldüsen von unten zugeführt.

Beim Auftreffen der Wasserstrahlen aus den Vollstrahldüsen auf die untere Oberfläche des Bandes entstehen zu Beginn der Abkühlung in etwa den Wasserstrahldurchmessem entsprechende Auftreffflächen, an deren Rändern das Wasser nach unten abgesprengt wird. Mit fortschreitender Abkühlung entsteht um die Auftrefffläche ein Wasserfilm, der in einem bestimmten Abstand zur Auftrefffläche in einen Vorhang aus ständig herabfallenden Tropfen übergeht. Eine mögliche. Erklärung dieses Phänomens ist, dass am Rand des Wasserfilms durch die im Vergleich zur Auftrefffläche höhere Temperatur des Bandes Wasser verdampft und nachströmendes Wasser zu herabfallenden Tropfen ablöst. Mit weiter fortschreitender Abkühlung treffen die Wasserfilme benachbarter Wasserstrahlen aneinander, wobei die Tropfenbildung an diesen Stellen erfolgt.

Überraschenderweise zeigen nach dem erfindungsgemäßen Verfahren abgekühlte Bänder aus Aluminium oder Aluminiumlegierungen eine wesentlich verbesserte Planheit im Vergleich zu nach den bekannten Abkühlverfahren abgekühlten Bändern. Die Wirkungsweise ist bisher nicht vollständig bekannt.

Als eine mögliche Ursache für die Planheit wird die linienförmige Anordnung punktueller Kühlzentren durch die über die Breite des Bandes in einer Reihe verteilten Wasserstrahlen aus den Vollstrahldüsen mit einem Düsendurchmesser von 0,5 bis 5 mm angesehen. Dabei durchläuft das Band eine oder mehrere im Wesentlichen senkrecht zur Transportrichtung verlaufende, abrupt einsetzende durch die Düsenreihen gebildete Kühlfronten. Als weitere Ursache für die Planheit wird ein homogener Wärmeübergang in den Auftreffflächen der kompakten Wasserstrahlen, die gleichmäßige Verteilung der Auftreffflächen auf eine oder mehrere Düsenreihen sowie die damit verbundene sehr effektive Abkühlung gesehen.

Bei einem erfindungsgemäßen Verfahren ist es z.B. möglich, mit spezifischen Wassermengen von 50 bis 2000 l/m²min eine Schroffabkühlung von Bändern aus Aluminium oder einer Aluminiumlegierung einer Dicke von 0,2 bis 6 mm und einer Breite von 0,5 bis 2,2 m bei Durchlaufgeschwindigkeiten von 5 bis 100 m/min zu erzielen. Die spezifische Wassermenge wird umso höher gewählt, je größer die Dicke der Bänder und die gewünschte Abkühlgeschwindigkeit sind. Dabei können Schroffabkühlungen nach einem Warmwalzen oder: Lösungsglühen mit Ausgangstemperaturen von 400 bis 600 °C durchgeführt werden.

Mit dem erfindungsgemäßen Verfahren ist es z.B. auch möglich, Bänder aus Aluminium oder einer Aluminiumlegierung nach einem Lackieren der Bänder mit Anfangstemperaturen der Abkühlung von 150 bis 300 °C bei Durchlaufgeschwindigkeiten von z.B. 200 m/min abzukühlen.

Ein erfindungsgemäßes Verfahren ist auch zur Schroffabkühlung von Platten aus Aluminium oder einer Aluminiumlegierung mit Dicken auch größer als 6 mm, z.B. mit Dicken von 6 bis 50 mm, geeignet. Dabei werden bevorzugt Vollstrahldüsen mit einem Düsendurchmesser von 1,5 bis 5 mm eingesetzt.

Ein erfindungsgemäßes Verfahren ist grundsätzlich auch zum Abkühlen von Profilen aus Metall, insbesondere aus Alumium oder einer Aluminiumlegierung, geeignet. Dazu werden statt überwiegend der unteren Oberfläche der Profile überwiegend die untere Oberfläche sowie entsprechende Seitenflächen der Profile mit aus Vollstrahldüsen austretenden Wasserstrahlen beaufschlagt.

Ein Druck d.h. ein Wasserdruck an den Vollstrahldüsen, von 0,03 bis 1 bar gemäß Anspruch 3, mit dem Austrittsgeschwindigkeiten der Wasserstrahlen der Größenordnung von 2 bis 14 m/s erzielt werden, ermöglicht geeignete Wasserstrahlen mit genügend langen Strahllängen zur Schroffabkühlung.

Durch die Variation der Temperatur der austretenden Wasserstrahlen im Bereich von 20 bis 95 °C gemäß Anspruch 3 kann die Kühlleistung der erfindungsgemäßen Schroffabkühlung z.B. an die metallurgischen Erfordernisse angepasst werden. Beispielsweise kann durch diese Variation und/oder durch die Variation der spezifischen Wassermenge durch Änderung des Druckes, des Düsendurchmessers, der Teilung und/oder des Abstandes der Düsenreihen die Abkühlgeschwindigkeit eingestellt werden.

Durch zumindest senkrecht zur Transportrichtung oszillierende Wasserstrahlen gemäß Anspruch 4 wird das Abkühlen des Bandes vergleichmäßigt. Die Wasserstrahlen können in eine Oszillation senkrecht zur Transportrichtung oder in eine rotierende Bewegung versetzt werden.

Die Oszillation der Wasserstrahlen kann gemäß Anspruch 5 mit einer Frequenz von 5 bis 200 Hz und gemäß Anspruch 6 mit einem Hub der Wasserstrahlen auf der beaufschlagten unteren. Oberfläche des Bandes von 0,5 bis 50 mm, insbesondere von 2 bis 40 mm, erfolgen.

Bei der Oszillation der Wasserstrahlen sollte die Kompaktheit der Wasserstrahlen im Wesentlichen erhalten bleiben. D.h. bei bestimmten Kombinationen von Frequenzen und Hüben können die Wasserstrahlen an ihren Rändern weniger kompakt sein. Im innern sollten die Wasserstrahlen kompakt bleiben. Dieser Effekt wird als Ausfransen der Ränder der Wasserstrahlen bezeichnet.

Bei einer erfindungsgemäßen Schroffabkühlung eines Bandes aus Aluminium oder aus einer Aluminiumlegierung wurden mittlere Wärmeübergangszahlen von je nach Dicke des Bandes 0,5 bis 20 kW /m² °C aus Temperaturmessungen abgeleitet.

Eine Vorichtung gemäß Anspruch 5 ist besonders gut zur Durchführung eines Verfahrens nach Anspruch 1 geeignet, wenn die als Vollstrahldüsen ausgebildeten Düsen mit Durchmessern von 0,5 bis 5 mm, vorzugsweise 1 bis 5 mm in mindestens einer Düseneinheit mit mindestens einer Düsenreihe angeordnet sind. Eine Düseneinheit umfasst einen Wasserkasten und einen Düsenbalken, an dem die Düsen montiert sind. Der Düsenbalken kann beispielsweise über an die Düsen angeschlossene, flexible Zuleitungen mit dem Wasserkasten verbunden oder als Deckel des Wasserkasten ausgebildet sein.

Vorrichtungen nach Anspruch 10 sind besonders gut zur rung von Verfahren nach Anspruch 4 geeignet.

Gemäß Anspruch 6 werden Düsen eingesetzt, die in einer Düsenreihe mit einer Teilung von 10 bis 75 mm angeordnet sind. Diese Teilung stellt einen genügend großen Abstand der Düsen in einer Düsenreihe sicher, der zum Ablaufen des abtropfenden und zurückfließenden Wassers ohne Behinderung der aus den Düsen austretenden Wasserstrahlen notwendig ist Daa Austreten der Wasserstrahlen aus den Vollstrahldosen ohne Behinderung wird als wesentlicher Beitrag zur Erzielung von Bändern und Platten angesehen, die nach einer Schroffabkuhlung im Wesentilchen verzugfrei sind.

Eine Behinderung der austretenden Wasserstrahlen durch abtropfendes und zurückfileßendes Wasser wird insbesondere bei einem Verhältnis von Teilung zu Düsendurchmesser von 10 bis 50 gemäß Anspruch 9 vermieden. Dadurch ist eine hohe Planhelt, insbesondere der abgekühlten Bänder erzielbar.

Bevorzugt werden gemäß Anspruch 7 die Düsen in mindesten zwei Düsenreihen mit einem Abstand der Reihen von 10 bis 500 mm, insbesondere 20 bis 200 mm, angeordnet. Die Düsen können in den Reihen versetzt zueinander angeordnet sein. Die in mehreren Reihen, z.B. in 4 oder in 30 Reihen hintereinander, z.B. in Abstand von 20 mm angeordneten Düsen bilden ein Düsenfeld. Die auch als Kühlstrecke bezeichnete Länge eines Düsenfeldes kann z.B. beim Abkühlen um eine Temperaturdifferenz von 200 °C mit einer Abkühlgeschwindigkeit von 300 °C/s bei Bandgeschwindiskeiten 5 bis 100 m/min 0,06 bis 1,1 m betragen. Die Kühlstrecke kann bei höheren Bandgeschwindigkeiten durch größere Abstände der Düsenreihen auch größer sein.

Gemäß Anspruch 7 sind die Düsen in mindestens zwei Düseneinheiten angeordnet. Dies ermöglicht die Düseneinheiten unterschiedlich anzusteuern, z.B. mit unterschiedlich heißem Kühlwasser zur Variation der Temperatur der Wasserstrahlen und/oder mit unterschiedlich hohem Druck zur Variation der Wassergeschwindigkeit und damit der Kühlleistung. Dies ermöglicht auch, gemäß Anspruch 8 die Düseneinheiten in Transportrichtung gegeneinander verschiebbar auszubilden und damit ihre Abstände an geänderte Erfordernisse, z.B. geänderte Bandgeschwindigkeiten der Schroffabkühlung, anzupassen. Wesentlich bei der Verschiebbarkeit der Düseneinheilen ist, dass die die Düsen tragenden Düsenbalken gegeneinander verschiebbar sind.

Durch austauschbare Düsen kann die Kühlleistung durch die Wasserstrahlen auch innerhalb einer Düsenreihe einer Düseneinheit unterschiedlich gewählt werden, zum Beispiel kann die Kühlleistung am Rand durch geringere Düsendurchmesser geringer gewählt werden. Innerhalb einer Düsenreihe können zur Variation der Kühlleistung die Düsen mit verschließbaren Düsenöffnungen versehen sein, wodurch eine Vergrößerung der Teilung ermöglicht wird.

Als Variante kann auch vorgesehen werden, dass die Düsen einer Düseneinheit einzeln ansteuerbar sind, z.B. mit unterschiedlich heißem Kühlwasser oder unterschiedlich hohem Druck.

Eine weitere, einfache Maßnahme, sicherzustellen, dass abtropfendes und zurückfließendes Wasser ablaufen kann, ohne das Austreten der Wasserstrahlen aus den Düsenöffnungen zu behindern, ist gemäß Anspruch 9, die Düsenöffnungen mit einem Abstand von 5 bis 30 mm zu Ablaufflächen anzuordnen. Die Wasserstrahlen treten dadurch mit einem Abstand von 5 bis 30 mm zu den Ablaufflächen aus den Düsenöffnungen aus. Dazu ragen die Düsen aus den Ablaufflächen hervor. Die Ablaufflächen können durch einen Düsenbalken, in den die Düsen eingesetzt sind, gebildet sein.

Zur Oszillation der Düsen und damit der Wasserstrahlen können gemäß Anspruch 10 eine oder mehrere Düseneinheiten mit je einer oder mehreren Düsenreihen oder Teile der Düseneinheiten, z.B. die Düsenbalken, an einen Oszillationsantrieb angeschlossen sein. Dies erhält im Unterschied zur Oszillation der Wasserstrahlen durch periodische Ablenkung mittels Luft- oder Wasserstrahlen, wie in der EP 0 695 590 beschrieben, die Kompaktheit der Wasserstrahlen im Wesentlichen und sichert damit die Planheit der Bänder beim Schroffabkühlen.

Ein solcher Oszillationsantrieb kann ein Exzenter oder ein Exzenter mit Pleuelstange sein. Zur Erzeugung einer Oszillation kann die Düseneinheit auch federnd befestigt und an eine Oszillationseinheit angeschlossen sein. Statt der Düseneinheit kann z.B. auch ein die Düsen tragender Düsenbalken der Düseneinheit durch Anschluss an einen Oszillationsantrieb in Oszillation versetzt werden. Die Düseneinheiten oder die Düsenbalken können auch in eine Rotation parallel zur Transportebene versetzt werden.

Die Düseneinheiten können mit separaten Oszillationsantrieben verbunden sein und mit verschiedenen Frequenzen und/oder Hüben betrieben werden.

Die Erfindung wird anhand von in der Zeichnung schematisch dargestellten Ausführungsbeispielen weiter erläutert.

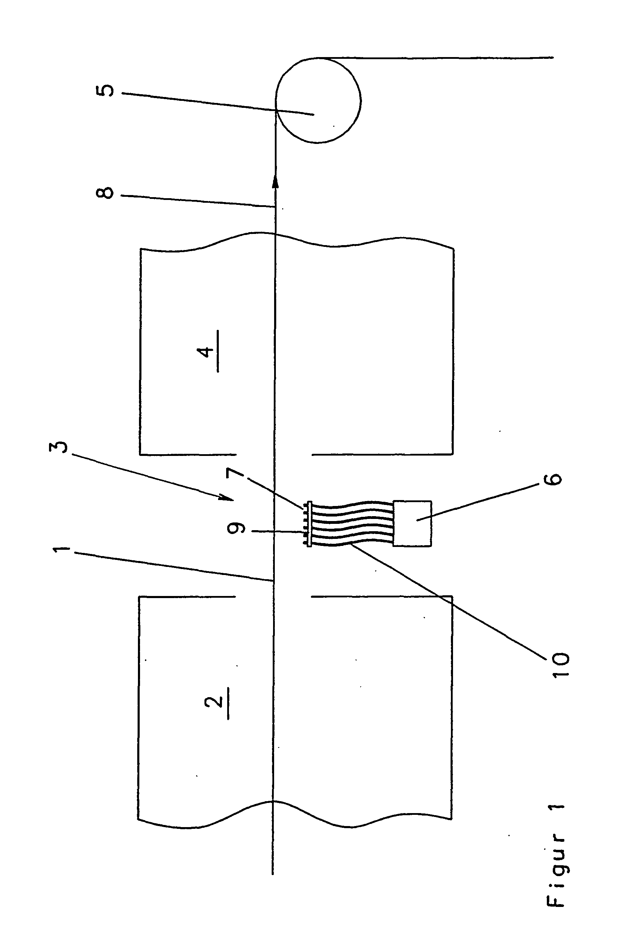

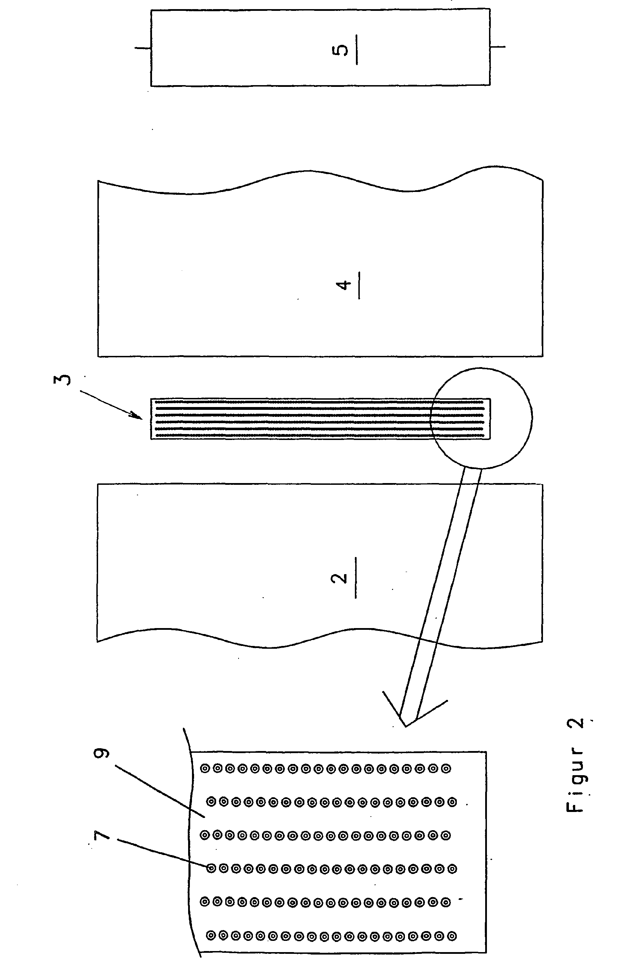

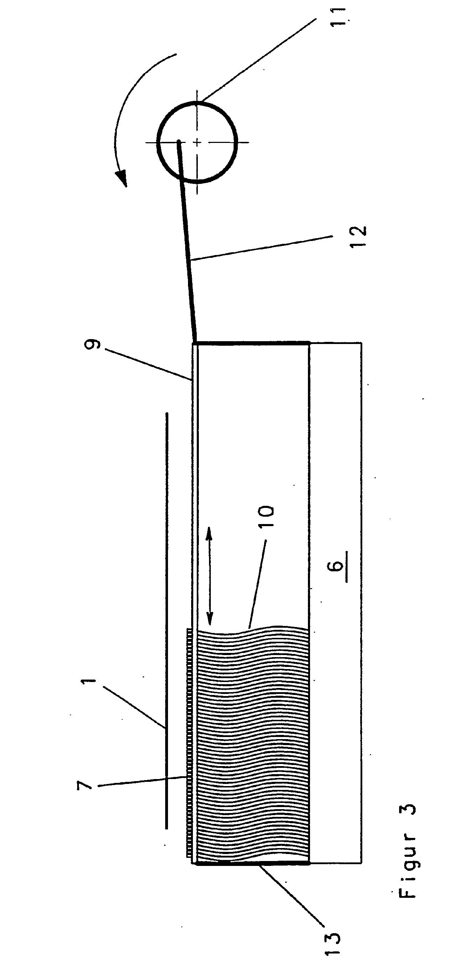

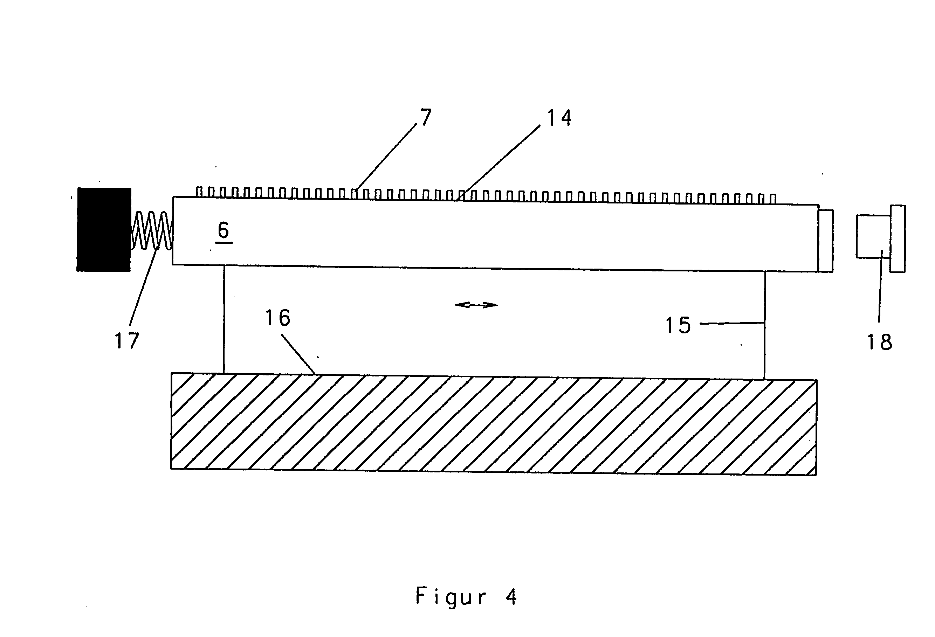

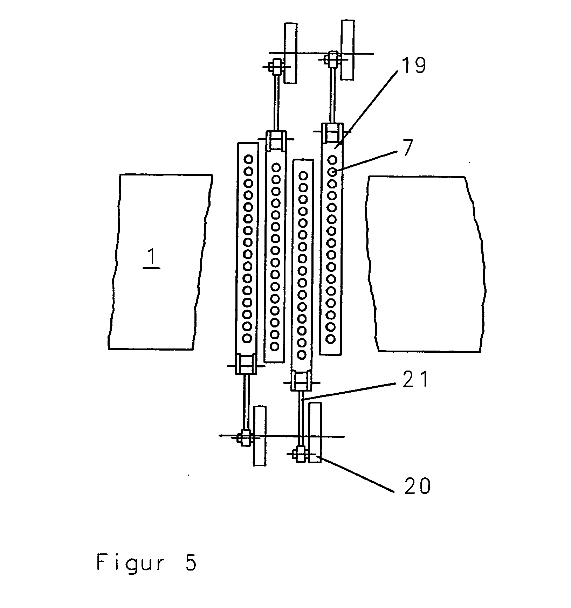

Figur 1 zeigt eine Seitenansicht einer Anlage zur Erwärmung und Kühlung eines Bandes mit einer erfindungsgemäßen Kühlvorrichtung und Figur 2 eine Draufsicht auf die Anlage ohne Band mit einer vergrößerten Darstellung einer Düseneinheit. In Figur 3 ist eine erfindungsgemäße Kühleinrichtung eines ersten Beispiels und in Figur 4 eines zweiten Beispiels anhand von Ansichten in Transportrichtung dargestellt. Figur 5 zeigt eine Kühleinrichtung eines dritten Beispiels anhand einer Draufsicht auf das Band, das im Bereich der Kühleinrichtung ausgeschnitten ist.

Eine Anlage zur Erwärmung und Kühlung eines Bandes 1 aus einer Aluminiumlegierung umfasst eine Wärmebehandlungsvorrichtung, die als ein z.B. mit Schwebedüsen versehener Glühdurchlaufofen 2 ausgebildet sein kann, eine erfindungsgemäße Kühlvorrichtung 3, eine zweite z.B. als Luftkühler 4 mit Schwebedüsen ausgebildete Kühlvorrichtung, eine Umlenkwalze 5 sowie weitere nicht dargestellte Behandlungsstationen (Figuren 1 und 2).

Eine erfindungsgemäße Kühlvorrichtung 3 eines ersten Beispiels weist unterhalb des Bandes 1 eine Düseneinheit mit einem Wasserkasten 6 und mit Düsen 7 auf, die in sechs senkrecht zur Transportrichtung 8 verlaufenden Düsenreihen angeordnet sind. In diesem Beispiel sind die Düsen 7 auf einem Düsenbalken 9 montiert. Der Düsenbalken 9 ist als eine parallel zum Band 1 oberhalb des Wasserkastens 6 mit Abstand zu diesem angeordnete Platte ausgebildet, die durch ihre Oberseite eine Ablauffläche bildet. Die Düsen 7 sind einzeln über flexible Zuleitungen, z.B. über Schläuche 10 mit dem Wasserkasten 6 verbunden. Die Düsen 7 ragen aus dem Düsenbalken 9 hervor, so dass ihre Düsenöffnungen mit einem Abstand von 15 mm zur Ablauffläche angeordnet sind. Der Abstand der Düsenöffnungen zum Band 1 beträgt etwa 50 bis 500 mm.

Die Düsen 7 sind als Vollstrahldüsen ausgebildet. Ihre Düsenöffnungen weisen einen Düsendurchmesser von 1,2 mm auf innerhalb der Düsenreihen ist eine Teilung von 15 mm vorgesehen. Der Abstand der Düsenreihen beträgt 40 mm. Die Kühlstrecke entlang der 6 Düsenreihen beträgt damit 200 mm. Die Düsen 7 hintereinanderliegender Düsenreihen sind in diesem Beispiel versetzt zueinander angeordnet.

An den Düsenbalken 9 der Düseneinheit ist ein Oszillationsantrieb angeschlossen, der einen Exzenter 11 und eine Pleuelstange 12 aufweist. Der Düsenbalken 9 ist über eine senkrecht zur Transportrichtung 8 bewegliche Halterung 13 auf dem Wasserkasten 6 befestigt. Die Oszillationsrichtung ist in Figur 3 durch einen Doppelpfeil gekennzeichnet. Der Oszillationsantrieb ist nur in Figur 3 dargestellt.

Im Betrieb durchläuft das Band 1, das z.B. eine Breite von 2 m und eine Dicke von 1,0 mm aufweist und mit einer Geschwindigkeit von 18 m/min transportiert wird, nach Verlassen des Glühdurchlaufofens 2 die Kühlvorrichtung 3. In der Kühlvorrichtung 3 wird durch aus den Düsen 7 austretende Wasserstrahlen die untere Oberfläche des Bandes 1 mit Kühlmittel, d.h. mit Wasser, beaufschlagt.

Der am Wasserkasten anliegende Druck beträgt 0,16 bar. Dies führt zu einer Austrittsgeschwindigkeit der Wasserstrahlen aus den Düsen 7 von etwa 5,6 m/s und einer spezifische Wassermenge von etwa 633 l/m²min. Die Wassertemperatur beträgt 30 °C.

Die Wasserstrahlen oszillieren durch Bewegung des Exzenters 11 mit einer Frequenz von 5 bis 200 Hz. Der Hub der Wasserstrahlen auf der Oberfläche des Bandes beträgt 2 bis 8 mm.

Dabei wird das Band 1 von einer Temperatur von 500°C mit einer Geschwindigkeit von 300 °C/s auf eine Temperatur von 300 °C abgekühlt. Das abgekühlte Band 1 zeigt keine Verwerfungen und keinen Verzug. Es zeichnet sich durch eine hohe Planheit aus.

Ein zweites Beispiel einer erfindungsgemäßen Kühleinrichtung (Figur 4) unterscheidet sich vom ersten Beispiel darin, dass die Düseneinheiten Düsen 7 mit größeren Düsendurchmessern und einer größeren Teilung aufweisen, wobei die Düsen 7 direkt am Wasserkasten 6 montiert sind. Ein Düsenbalken 14 dieses Beispiels ist als Deckel des Wasserkastens 6 ausgebildet. Der Wasserkasten 6 mit den Düsen 7 ist über eine senkrecht zur Transportrichtung 8 federnde Halterung 15, zum Beispiel Blattfedern an einem Bodengestell 16, befestigt. Am Wasserkasten 6 greift senkrecht zur Transportrichtung 8 an einer Seite eine Feder 17 und an der anderen Seite ein als Elektromagnet 18 ausgebildeter Oszillationsantrieb an. Die Oszillationsrichtung ist in Figur 4 durch einen Doppelpfeil gekennzeichnet.

Bei einem dritten Beispiel (Figur 5) entspricht der prinzipielle Aufbau der Düseneinheiten dem des ersten Beispiels, wobei im Unterschied dazu vier Düseneinheiten mit je einer Düsenreihe mit Düsen 7 vorgesehen sind. Die Düsen 7 der vier Düseneinheiten sind auf vier separaten Düsenbalken 19 montiert. Die vier Düseneinheiten sind dadurch unterschiedlich ansteuerbar.

Die vier Düsenbalken 19 sind einzeln mit vier Exzentern 20 und vier Pleuelstangen 21 verbunden. Damit sind die vier Düseneinheiten einzeln antreibbar, so dass die austretenden Wasserstrahlen der unterschiedlichen Düseneinheiten mit unterschiedlichen Frequenzen und/oder unterschiedlichen Hüben oszillieren können.

Düseneinheiten können, in der Zeichnung nicht dargestellt, in Transportrichtung gegeneinander verschiebbar ausgebildet sein und/oder auswechselbare Düsen 7 und/oder verschließbaren Düsenöffnungen aufweisen.

In der Zeichnung ebenfalls nicht dargestellt können zusätzlich weitere Düsen oberhalb des Bandes 1 angeordnet sein.

## Patentansprüche

1. Verfahren zum Schroffabkühlen von Bändern (1) oder Platten aus Metall, bei dem die Bänder oder Platten in einer Kühlvorrichtung mit aus Düsen (7) austretenden, auf die Oberfläche der Bänder (1) oder Platten auftreffenden Wasserstrahlen beaufschlagt werden, wobei die Düsen (7) in mindestens einer sich über die Breite der Bänder oder Platten erstreckenden Reihe angeordnet sind, **dadurch gekennzeichnet, dass**
überwiegend die untere Oberfläche der Bänder (1) oder Platten durch die Wasserstrahlen beaufschlagt wird, die aus als Vollstrahldüsen mit Düsenmessern von 0,5 bis 5 mm ausgebildeten Düsen (7) austreten, so dass ein Durchmesser der Wasserstrahlen ohne Hindernisse im Verlauf der Wasserstrahlen über eine Strahllänge, die größer als ein Abstand der Vollstrahldüsen zu den Bändern (1) oder Platten ist, konstant ist.

2. Verfahren nach Anspruch 1, **dadurch gekennzeichnet, dass**
die aus den Vollstrahldüsen austretenden Wasserstrahlen auf der unteren Oberfläche der Bänder oder Platten den Düsendurchmessern entsprechende Auftreffflächen in linlenförmiger Anordnung erzeugen und die Schroffabkühlung durch intensiven Wärmeübergang über diese punktuellen Kühlzentren bei geringer Dampfbildung bewirken.

3. Verfahren nach Anspruch 1 und 2, **dadurch gekennzeichnet, dass**
ein an den Düsen (7) anliegender Druck 0,03 bis 1 bar und die Temperatur der austretenden Wasserstrahlen 20 bis 95 °C beträgt.

4. Verfahren nach einem der Ansprüche 1 bis 3, **dadurch gekennzeichnet, dass**
die Wasserstrahlen die untere Oberfläche der Bänder oder Platten, zumindest senkrecht zur Transportrichtung (8) mit einer Frequenz von 5 bis 200 Hz sowie einem Hub von 0,5 bis 50 mm, insbesondere 2 bis 40 mm, oszillierend beaufschlagen.

5. Kühlvorrichtung zum Schroffabkühlen von Bändern (1) oder Platten aus Metall mit auf deren Oberfläche gerichteten Düsen (7), die über die Breite der Bänder oder Platten angeordnet sind, wobei mindestens eine unterhalb der Bänder (1) oder Platten angeordnete Düseneinheit mit mindestens einer sich über die Breite der Bänder oder Platten erstreckenden Düsenreihe vorgesehen ist, **dadurch gekennzeichnet, dass**
die Düsen (7) als Vollstrahldüsen mit Düsendurchmessern von 0.5 bis 5 mm ausgebildet sind, so dass ein Durchmesser der Wasserstrahlen ohne Hindernisse im Verlauf der Wasserstrahlen über eine Strahllänge, die größer als ein Abstand der Vollstrahldüsen zu den Bändern (1) oder Platten ist, konstant ist.

6. Kühlvorrichtung nach Anspruch 5, **dadurch gekennzeichnet, dass**
die Düsen (7) in einer Reihe in einer Teilung von 10 bis 75 mm angeordnet sind und dass das Verhältnis von Teilung zu Düsendurchmesser 10 bis 50 beträgt.

7. Kühlvorrichtung nach einem der Ansprüche 5 und 6, **dadurch gekennzeichnet, dass**
die Düsen (7) in mindestens zwei Reihen oder in mindestens zwei Düseneinheiten mit einem Abstand von 10 bis 500 mm, insbesondere 20 bis 200 mm, angeordnet sind.

8. Kühlvorrichtung nach Anspruch 7, **dadurch gekennzeichnet, dass**
die Düseneinheiten (9, 14, 19) in Transportrichtung (8) der Bänder oder Platten gegeneinander verschiebbar ausgebildet sind.

9. Kühlvorrichtung nach einem der Ansprüche 5 bis 8, bei der die Düseneinheiten mindestens eine Ablauffläche zwischen den Dosen (7) einer Düsenreihe aufweisen, **dadurch gekennzeichnet, dass**
die Düsen (7) aus einem die Ablauffläche bildenden Düsenbalken (9,14,19) hervorragen, wobei ihre Öffnungen mit einem Abstand von 5 bis 30 mm zur Ablauffläche angeordnet sind.

10. Kühlvorrichtung nach einem der Ansprüche 5 bis 9, **dadurch gekennzeichnet, dass**
eine oder mehrere Düseneinheiten oder Teile der Düseneinheiten mit einem gemeinsamen oder mehreren separaten Oszillationsantrieben verbunden sind.

## Claims

1. Method of intensively cooling strips (1) or plates of metal, in which the strips or plates are subject to jets of water emerging out of jet nozzles (7) and impinging on the surface of the strips (1) or plates, the jet nozzles (7) being arranged in a row extending over the width of the strips or plates, **characterized in that**
predominantly the lower surfaces of the stripes (1) or plates are subject to the jets of water which emerge out of the jet nozzles (7) made as full water jet nozzles with a nozzle diameter of 0.5 to 5 mm so that a diameter of the jets of water is constant over a jet length which is longer than a distance of the full water jet nozzles to the strips (1) or plates, if there are no obstacles in the course of the jets of water.

2. Method of claim 1, **characterized in that**
the jets of water emerging out of the full water jet nozzles create a linear arrangement of impact areas at the lower surface of the strips or plates corresponding to the nozzle diameters and effect the intensive cooling due to an intensive heat transfer via these punctiform cooling centres at a low formation of vapour.

3. Method of claims 1 and 2, **characterized in that**
a pressure acting upon the jet nozzles (7) is 0.03 to 1 bar and a temperature of the emerging jets of water is 20 to 95° C.

4. Method of any of the claims 1 to 3, **characterized in that**
the jets of water impinge the lower surface of the strips or plates in an oscillating way at least orthogonal to the transport direction (8) at a frequency of 5 to 200 Hz and at a stroke of 0.5 to 50 mm, particularly of 2 to 40 mm.

5. Cooling device for intensively cooling strips (1) or plates of metal having jet nozzles (7) directed onto their surfaces, which are ranged over the width of strips or plates, wherein at least one nozzle unit arranged beneath the stripes (1) or plates is provided with at least one row of jet nozzles extending over the width of the strips of plates, **characterized in that**
the jet nozzles (7) are made as full water jet nozzles with a nozzle diameter of 0.5 to 5 mm so that a diameter of the jets of water is constant over a jet length which is longer than a distance of the full water jet nozzles to the strips (1) or plates, if there are no obstacles in the course of the jets of water.

6. Cooling device according to claim 5, **characterized in that**
the jet nozzles (7) are arranged in a row at a partition of 10 to 75 mm and that the ratio of partition to nozzle diameter is 10 to 50.

7. Cooling device according to any of the claims 5 and 6, **characterized in that**
the jet nozzles (7) are arranged in at least two rows or in at least two nozzle units at a distance of 10 to 500 mm, particularly of 20 to 200 mm.

8. Cooling device according to claim 7, **characterized in that**
the nozzle units (9, 14, 19) are movable with regard to each other in the transport direction (8) of the strips or plates.

9. Cooling device according to any of the claims 5 to 8, in which the nozzle units comprise at least one drain surface between the jet nozzles (7) of one nozzle row,
**characterized in that**
the jet nozzles (7) protrude over a nozzles bar (9, 14, 19) forming the drain surface, their orifices being arranged at a distance of 5 to 30 mm to the drain surface.

10. Cooling device according to any of the claims 5 to 9, **characterized in that**
one or a plurality of nozzle units or parts of nozzle units are connected to a common or a plurality of separate reciprocating drives.

## Revendications

1. Procédé de refroidissement brusque de bandes (1) ou de plaques en métal, dans lequel les bandes (1) ou les plaques, dans un dispositif de refroidissement, sont frappées par des jets d'eau sortant de buses (7) et incidents sur la surface des bandes (1) ou des plaques, les buses (7) étant disposées dans au moins une rangée qui s'étend sur la largeur des bandes ou des plaques, **caractérisé en ce que** principalement la surface inférieure des bandes (1) ou des plaques est frappée par les jets d'eau qui sortent des buses(7) réalisées sous forme de buses à jet plein avec des diamètres de 0,5 à 5 mm, de telle sorte que, sans obstacle dans la trajectoire des jets d'eau, un diamètre des jets d'eau est constant sur une longueur de jet qui est supérieure à la distance entre les buses à jet plein et les bandes (1) ou plaques.

2. Procédé selon la revendication 1, **caractérisé en ce que** les jets d'eau sortant des buses à jet plein génèrent, sur la surface inférieure des bandes ou des plaques, des surfaces d'impact correspondant aux diamètres des buses, disposées en ligne, et provoquent le refroidissement brusque par un transfert intensif de chaleur sur ces centres ponctuels de refroidissement, avec une formation réduite de vapeur d'eau.

3. Procédé selon les revendications 1 et 2, **caractérisé en ce qu'**une pression de 0,03 à 1 bar est appliquée au niveau des buses (7) et la température des jets d'eau sortants est de 20 à 95°C.

4. Procédé selon l'une des revendications 1 à 3, **caractérisé en ce que** les jets d'eau frappent la surface inférieure des bandes et des plaques, au moins perpendiculairement à la direction du transport (8), de manière oscillante, avec une fréquence de 5 à 200 Hz et une course de 0,5 à 50 mm, en particulier de 2 à 40 mm.

5. Dispositif de refroidissement destiné au refroidissement brusque de bandes (1) ou de plaques en métal, comportant des buses (7), qui sont dirigées vers la surface desdites bandes ou plaques et qui sont disposées sur la largeur des bandes ou des plaques, dans lequel est prévue au moins une unité de buses, disposée en dessous des bandes (1) ou des plaques avec au moins une rangée de buses s'étendant sur la largeur des bandes ou des plaques, **caractérisé en ce que** les buses (7) sont réalisées sous forme de buses à jet plein avec des diamètres de buse de 0,5 à 5 mm, de telle sorte que, sans obstacle dans la trajectoire des jets d'eau, un diamètre des jets d'eau est constant sur une longueur de jet qui est supérieure à la distance entre les buses à jet plein et les bandes (1) ou plaques.

6. Dispositif de refroidissement selon la revendication 5, **caractérisé en ce que** les buses (7) sont disposées en une rangée avec un écartement de 10 à 75 mm et **en ce que** le rapport entre l'écartement et le diamètre de buse est de 10 à 50.

7. Dispositif de refroidissement selon l'une des revendications 5 et 6, **caractérisé en ce que** les buses (7) sont disposées en au moins deux rangées ou en au moins deux unités de buses avec un intervalle de 10 à 500 mm, en particulier de 20 à 200 mm.

8. Dispositif de refroidissement selon la revendication 7, **caractérisé en ce que** les unités de buses (9, 14, 19) sont réalisées de manière à pouvoir être déplacées l'une par rapport à l'autre dans la direction de transport (8) des bandes ou des plaques.

9. Dispositif de refroidissement selon l'une des revendications 5 à 8, dans lequel les unités de buses comportent au moins une surface d'évacuation entre les buses (7) d'une rangée de buses, **caractérisé en ce que** les buses (7) s'avancent hors d'une barre de support de buses (9, 14, 19) formant la surface d'évacuation, grâce à quoi leurs orifices sont disposés à une distance de 5 à 30 mm de la surface d'évacuation.

10. Dispositif de refroidissement selon l'une des revendications 5 à 9, **caractérisé en ce que** une ou plusieurs parties de buses ou éléments des unités de buses sont reliées à un système d'entraînement oscillant commun ou à plusieurs systèmes d'entraînement oscillants séparés.
